# EUROPEAN PATENT APPLICATION

(11) **EP 4 617 331 A1**
(43) Date of publication of application: **17.09.2025**
(21) Application number: 24163706.5
(22) Date of filing: 15.03.2024
(51) Int. Cl.: C09D 11/101, C09D 11/30, C09D 11/38, B41M 5/00

(54) **UV CURABLE INKJET INKS AND INKJET PRINTING METHODS**

(71) Applicant: AGFA NV, 2640 Mortsel (BE)
(72) Inventor: ADRIAENSSENS, Yves, 2640 Mortsel (BE); SOETEMANS, Celine, 2640 Mortsel (BE)
(74) Representative: Strijckers, Hans Louis P.

(57) **Abstract**

A UV curable inkjet ink including a) 20 to 45 wt% of monofunctional monomers or oligomers including a monofunctional acrylate methacrylate; b) 5 to 55 wt% of an ethoxylated polyfunctional acrylate monomer or oligomer; c) 12.0 wt% or more of an acylphosphine oxide photoinitiator and optionally an amine synergist; wherein the ratio R1 of the wt% of ethoxylated polyfunctional acrylate monomer or oligomer over the wt% of non-ethoxylated polyfunctional acrylate monomer or oligomer is between 0.1 and 4.0; wherein the ratio R2 of the wt% of monofunctional methacrylate over he wt% of monofunctional acrylate is no more than 1.2; and wherein all wt% are based on the total weight of the UV curable inkjet ink. Inkjet printing methods with the UV curable inkjet ink are also disclosed.

## Description

### Technical Field

The present invention relates to UV curable inkjet inks, especially UV curable varnish inkjet inks, for manufacturing inkjet printed corrugated cardboard.

### Background Art

Corrugated cardboard is a preferred packaging material as it is low cost and lightweight. Lightweight packaging material reduces transportation costs and facilitates the handling during delivery to the customer. A further benefit is that corrugated cardboard boxes are recyclable and stackable, making them easy to store and transport.

It has been observed that sometimes inkjet printed cardboard boxes do not "glide" well over each other when stacking them in a transport vehicle or on a storage rack. And when gliding is good, then often cracks are observed upon bending the corrugated cardboard used for the box.

UV curable inkjet inks for printing on corrugated cardboard are known. For example, EP 4286483 A (AGFA NV) discloses inkjet printing methods including the jetting of a UV curable varnish on a substrate, such as corrugated cardboard, wherein the static surface tension of the varnish is 28 mN/m or more; and wherein the varnish contains more than 12 wt% of acylphosphineoxide photoinitiator based on the total weight of the varnish.

Inkjet varnishes are also disclosed in e.g. US 2013286095 (SEIKO EPSON) , EP 2657037 A (SEIKO EPSON) , US 2014370214 (FUJIFILM) and US 2015091217 (FUJIFILM) .

However, there is still a need for improved UV curable inkjet inks, especially varnishes that exhibit good gliding performance, bending without cracks and good UV curability.

### Summary of invention

In order to overcome the problems described above, preferred embodiments of the present invention have been realized with a UV curable inkjet as defined in claim 1.

It was surprisingly found that by controlling the ratios of specific monofunctional and polyfunctional monomers and oligomers in the ink composition, good bending and gliding properties could be obtained, while maintaining good UV curability.

It is an object of the invention to provide an improved inkjet printing method, especially for manufacturing printed corrugated cardboard.

Another object of the invention is the use of a UV curable colourless inkjet ink as a varnish on a (printed) corrugated cardboard.

These and other objectives will become apparent from the detailed description hereinafter.

### Brief description of drawings

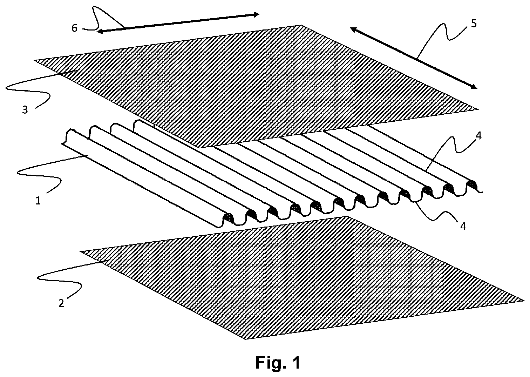

**Figure 1** illustrates the structure of a corrugated cardboard formed by gluing a fluted paperboard (1) with glue (4) to a paper linerboard (2) and a paper linerboard (3). The flute direction (5) and the perpendicular direction (6) are indicated for clarifying the bending test.

### Description of embodiments

### Definitions

The term "monofunctional" in monofunctional monomers or oligomer means that these compounds contain one polymerizable group.

The term "monofunctional acrylate" means that the compound contains one polymerizable group, more particularly a polymerizable acrylate group.

The term "monofunctional methacrylate" means that the compound contains one polymerizable group, more particularly a polymerizable methacrylate group.

The term "polyfunctional" in polyfunctional acrylate monomer or oligomer means that these compounds contain two or more polymerizable groups that include at least one polymerizable acrylate group.

The term "polyacrylate" means a compound having two or more polymerizable acrylate groups.

The term "ethoxylated" means two, three or more ethoxy groups connected to each other.

### UV Curable Inkjet Inks

A UV curable inkjet ink according to the invention includes a) 20 to 45 wt% of monofunctional monomers or oligomers including a monofunctional acrylate and 0 to 20 wt% of a monofunctional methacrylate; b) 5 to 55 wt% of an ethoxylated polyfunctional acrylate monomer or oligomer; c) 12.0 wt% or more of an acylphosphine oxide photoinitiator and optionally an amine synergist; wherein the ratio R1 of the wt% of ethoxylated polyfunctional acrylate monomer or oligomer over the wt% of non-ethoxylated polyfunctional acrylate monomer or oligomer is between 0.1 and 4.0;
wherein the ratio R2 of the wt% of monofunctional methacrylate over the wt% of monofunctional acrylate is no more than 1.2; and wherein all wt% are based on the total weight of the UV curable inkjet ink.

In a preferred embodiment, the ratio R1 is between 0.2 and 2 for which especially improved bending properties are observed.

In a preferred embodiment, the ratio R2 is no more than 1.0, more preferably no more than 0.8.

The UV curable inkjet ink is preferably a UV curable colourless inkjet ink, that can be used on a substrate as a primer or as a varnish. A primer is used to form a first layer on a substrate and may improve adhesion properties or prevent absorption of subsequent ink layers. A varnish is the outermost layer on a substrate and may provide a glossy or mat finish to a (printed) substrate and may form a protective layer for an ink image underneath. The advantages of a colourless UV curable inkjet ink in the present invention are most expressed as a UV curable varnish inkjet ink, because the outermost layer usually suffers most from bending and is also responsible for the gliding properties.

A UV curable varnish inkjet ink can be used as the sole inkjet ink in inkjet printing on a substrate, such as corrugated cardboard, but is preferably used in combination with a UV curable inkjet ink set. Such a UV curable inkjet ink set further includes one or more colored UV curable inkjet inks, wherein at least the UV curable varnish inkjet ink is an inkjet ink according to the invention.

The UV curable inkjet ink of the present invention may however also be a colored inkjet ink, more preferably part of a UV curable inkjet ink set. In such a case, preferably multiple and more preferably all UV curable inkjet inks are UV curable inkjet inks in accordance with the invention.

The above described UV curable inkjet ink set preferably includes at least one cyan curable ink (C), at least one magenta curable ink (M), at least one yellow curable ink (Y), and more preferably also at least one black curable ink (K). Such a CMYK-ink set may also be extended with extra inks such as red, green, blue, violaet and/or orange to further enlarge the color gamut of the image. The CMYK-ink set may also be extended by the combination of full density inkjet inks with light density inkjet inks. The combination of these dark and light color inks and/or black and grey inks improves the image quality by a lowered graininess.

The viscosity of the UV curable inkjet ink in accordance with the invention is preferably smaller than 20 mPa.s at 45°C and at a shear rate of 1,000 s⁻¹, more preferably between 2 and 15 mPa.s at 45°C and at a shear rate of 1,000 s⁻¹. The viscosity of an inkjet ink can be measured at 45°C and at a shear rate of 1,000 s⁻¹ using a Rotovisco^{™} RV1 viscometer from HAAKE.

The surface tension of the UV curable inkjet ink in accordance with the invention is preferably in the range of about 20 mN/m to about 40 mN/m at 25°C, more preferably in the range of about 22 mN/m to about 30 mN/m at 25°C.

The UV curable inkjet ink is preferably a free radical curable inkjet ink, more preferably a UV LED free radical curable inkjet ink. Preferably no second curing mechanism like cationic curing or thermal curing is used for polymerization.

### Monofunctional Monomers and Oligomers

Monofunctional monomers and oligomers are polymerizable compounds that have a single polymerizable group. Any monofunctional monomer and oligomer capable of free radical polymerization may be used. Suitable monofunctional monomers and oligomers may be found in the Polymer Handbook Vol 1 + 2, 4th edition, edited by J. BRANDRUP et al., Wiley-Interscience, 1999.

The monofunctional monomers and oligomers include monofunctional acrylates and preferably also methacrylates as polymerizable compounds, but may also include other types of monofunctional monomers and oligomers including an ethylenically unsaturated polymerizable group selected from the group consisting of an acrylamide, a methacrylamide, a styrene group, a maleate, a fumarate, an itaconate, a vinyl ether, a vinyl ester, an allyl ether and an allyl ester. Preferred monomers include N-vinyl caprolactam, and more preferably vinyl methyl oxazolidinone.

Monofunctional acrylates are preferably selected from the group consisting of isoamyl acrylate, stearyl acrylate, lauryl acrylate, octyl acrylate, decyl acrylate, isodecyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, cyclic trimethylolpropane formal acrylate, 3,3,5-trimethylcyclohexyl acrylate, 2-hydroxyethyl acrylate, 2-hydroxypropyl acrylate, 2-hydroxy-3-phenoxypropyl acrylate, 2-acryloyloxyethylsuccinic acid, 2-acryloyxyethylphthalic acid, 2-acryloxyethyl-2-hydroxyethyl-phthalic acid, lactone modified flexible acrylate, ethoxyethoxy ethyl acrylate, t-butylcyclohexyl acrylate and tricyclodecanemethanol acrylate, (3-ethyl-3-oxetanyl)methyl acrylate, and (2-methyl-2-ethyl-1 ,3-dioxolan-4-yl)methyl acrylate. Preferably at least one monofunctional acrylate comes from the above group.

The monofunctional acrylate is preferably present in an amount of 10 to 45 wt%, more preferably in an amount of 15 to 30 wt%, with all wt% based on the total weight of the UV curable inkjet ink.

Suitable monofunctional methacrylates include methacrylic acid, alkylmethacrylates (linear, branched and cycloalkyl) such as methylmethacrylate, n-butylmethacrylate, tert-butylmethacrylate, cyclohexylmethacrylate, 2-ethylhexylmethacrylate, and isotridecyl methacrylate; arylmethacrylates such as benzyl methacrylate, and phenyl methacrylate; and hydroxyalkylmethacrylates such as hydroxyethylmethacrylate, and hydroxypropylmethacrylate.

Preferred monofunctional methacrylates are tetrahydrofurfuryl methacrylate, alkyl methacrylate (preferably a C₁₂ to C₁₅ alkyl methacrylate), ethoxyethoxyethylmethacrylate, 2 phenoxyethyl methacrylate, ethoxylated-4-phenyl methacrylate, ureido methacrylate, behenyl methacrylate, and 3,3,5 trimethyl cyclohexanol methoxy polyethylene glycol (350) methacrylate.

The most preferred monofunctional methacrylate include isobornyl methacrylate.

The monofunctional methacrylate is present in an amount of 0 to 20 wt%, preferably in an amount of 0 to 10 wt%, and more preferably in an amount of 0 to 8wt%, with all wt% based on the total weight of the UV curable inkjet ink. An improvement in gliding properties is generally observed when using no or smaller amounts of monofunctional methacrylate.

### Ethoxylated Polyfunctional Acrylate Monomers and Oligomers

The ethoxylated polyfunctional acrylate monomer or oligomer is preferably an ethoxylated polyacrylate monomer or oligomer. Hence, the ratio R1 is preferably a ratio R1 of the wt% of ethoxylated polyacrylate monomer or oligomer over the wt% of non-ethoxylated polyfunctional acrylate monomer or oligomer is between 0.1 and 4.0.

VEEA is a preferred ethoxylated polyfunctional acrylate monomer or oligomer for the present invention that is not an ethoxylated polyacrylate monomer or oligomer. VEEA is 2-(2-vinyloxyethoxy)ethyl acrylate available from NIPPON SHOKUBAI.

The UV curable inkjet ink includes an ethoxylated polyfunctional acrylate monomer or oligomer in an amount of 5 to 55 wt%, more preferably in an amount of 10 to 35 wt% based on the total weight of the UV curable inkjet ink, with all wt% based on the total weight of the UV curable inkjet ink.

The ethoxylated polyfunctional acrylate monomer or oligomer preferably includes two or three acrylate groups, most preferably two acrylate groups. It was observed that the bending performance decreases if high amounts of ethoxylated polyfunctional acrylate are used that have more than two acrylate groups.

The ethoxylated polyfunctional acrylate monomer or oligomer includes at least two ethoxy groups, but preferably includes 3 or more ethoxy groups as this improves especially the bending properties. In a preferred embodiment of the UV curable inkjet ink according to the present invention, the ethoxylated polyacrylate includes from 5 to 20 ethoxy units.

In a preferred embodiment of the UV curable inkjet ink according to the present invention, the ethoxylated polyfunctional acrylate monomer or oligomer includes a compound selected from the group consisting of triethylene glycol diacrylate, tetraethylene glycol diacrylate, polyethylene glycol diacrylate, ethoxylated(3EO) hexanediol diacrylate, ethoxylated(5EO) hexanediol diacrylate, ethoxylated trimethylolpropane triacrylate and bisphenol A EO (ethylene oxide) adduct diacrylate.

### Non-Ethoxylated Polyfunctional Acrylate Monomers and Oligomers

Non-ethoxylated polyfunctional acrylate monomers and oligomers are polymerizable compounds include all polyfunctional acrylate monomers and oligomers that are not ethoxylated polyfunctional acrylate monomers and oligomers and thus include, for example, hexanediol diacrylate or propoxylated polyacrylates, such as dipropyleneglycol diacrylate.

Suitable non-ethoxylated polyfunctional acrylate monomers and oligomers include dipropylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethylol-tricyclodecane diacrylate, bisphenol A PO (propylene oxide) adduct diacrylate, hydroxypivalate neopentyl glycol diacrylate, propoxylated neopentyl glycol diacrylate, trimethylolpropane triacrylate, tri (propylene glycol) triacrylate, caprolactone modified trimethylolpropane triacrylate, pentaerythritol triacrylate, pentaerithritol tetraacrylate, pentaerythritolethoxy tetraacrylate, dipentaerythritol hexaacrylate, ditrimethylolpropane tetraacrylate, glycerinpropoxy triacrylate, and caprolactam modified dipentaerythritol hexaacrylate.

In a preferred embodiment of the UV curable inkjet ink according to the present invention, the non-ethoxylated polyfunctional acrylate monomer or oligomer includes at least one compound selected from the group consisting of 1,6-hexanediol diacrylate and dipropyleneglycol diacrylate.

The non-ethoxylated polyfunctional acrylate monomer or oligomer preferably includes two or three acrylate groups, most preferably two acrylate groups. It was observed that the bending performance decreases if high amounts of non ethoxylated polyfunctional acrylate are used that have more than two acrylate groups.

The amount of non-ethoxylated polyfunctional acrylate monomers and oligomers is preferably 14 to 50 wt%, more preferably 20 to 45 wt%, with all wt% based on the total weight of the UV curable inkjet ink.

### Acylphosphine Oxide Photoinitiators

A UV curable inkjet ink according to the invention includes at least 12.0 wt% or more, preferably more than 12.5 wt%, more preferably more than 13.5 wt% and most preferably 14.0 to 25.0 wt% or even 15.0 to 20.0 wt% of an acylphosphine oxide photoinitiator with all wt% based on the total weight of the UV curable inkjet ink.

In a particularly preferred embodiment of the UV curable inkjet ink, the acylphosphine oxide photoinitiator includes or consists of ethyl phenyl (2.4.6-trimethylbenzoyl) phosphinate, generally known as TPO-L. This acylphosphine oxide photoinitiator is commercially available, for example, as Omnirad^{™} TPO-L from IGM Resins.

Other acylphosphine oxide photoinitiators include bis(2,4,6-trimethylbenzoyl) phenyl phosphine oxide and 2,4,6-trimethylbenzoyl diphenyl phosphine oxide. However, these are less preferred than ethyl phenyl (2.4.6-trimethylbenzoyl) phosphinate. While bis(2,4,6-trimethylbenzoyl) phenyl phosphine oxide has solubility issues, 2,4,6-trimethylbenzoyl diphenyl phosphine oxide is regarded as carcinogenic, mutagenic or toxic for reproduction. Such acylphosphine oxide photoinitiators are commercially available, for example, as Omnirad^{™} 819 and Omnirad^{™} TPO from IGM Resins.

The acylphosphine oxide may also be a polymeric compound, such as Omnipol^{™} TP from IGM Resins.

In a preferred embodiment, the acylphosphine oxide photoinitiator includes an acyl group containing a polymerizable group or an acyl group selected from the group consisting of a benzoyl group substituted by an urea group or an oxalylamide group; a 2,6-dimethyl benzoyl group substituted in position 3 by an urea group or an oxalylamide group; a 2,6-dimethoxy benzoyl group substituted in position 3 by an urea group or an oxalylamide group; a 2,4,6-trimethyl benzoyl group substituted in position 3 by an urea group or an oxalylamide group; and a 2,4,6-trimethoxybenzoyl group substituted in position 3 by an urea group or an oxalylamide group. By using such an acylphosphine oxide photoinitiator, no mesitaldehyde is released after UV curing, which causes a bad odor of the printed substrate.

Suitable acylphosphine oxide photoinitiators having an acyl group substituted by an urea group or an oxalylamide group are disclosed in WO 2019/243039 (AGFA).

Suitable acylphosphine oxide photoinitiators including an acyl group containing a polymerizable group are disclosed by WO 2014/051026 (FUJIFILM) .

A combination of different acylphosphine oxide photoinitiators may also be used. For example, a combination of monofunctional acylphosphine oxide photoinitiators, such as TPO and TPO-L, and multifunctional acylphosphine oxide photoinitiators, such as bis(2,4,6-trimethylbenzoyl)-phenyl phosphine oxide. Preferably such a combination contains more monofunctional acylphosphine oxide photoinitiator than multifunctional acylphosphine oxide photoinitiator. A combination containing at least 70 wt% of monofunctional acylphosphine oxide photoinitiator in the acylphosphine oxide mixture generally exhibits a higher curing efficiency.

Alternatively, the acylphosphine oxide is a polymeric compound wherein the acylphosphine oxide structure is bonded to a polymeric chain on an acyl group side thereof. Suitable compounds are disclosed in WO 2014/129213 (FUJIFILM) . By having the acyl group bonded to the polymeric chain, the odor of the printed article is also suppressed.

### Amine Synergists

In order to increase the photosensitivity further, the UV curable inkjet ink may additionally contain one or more co-initiators, also called polymerization synergists, for which preferably amine synergists are used.

Suitable examples of amine synergists can be categorized in three groups:
1) tertiary aliphatic amines such as methyldiethanolamine, dimethylethanolamine, triethanolamine, triethylamine and N-methylmorpholine;
(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and
(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

The UV curable inkjet ink preferably includes an amine synergist, more preferably a polymerizable amine synergist.

In a preferred embodiment of the UV curable inkjet ink, the polymerization synergist is an acrylated amine synergist. Preferred acrylated amine synergists include Sartomer^{™} CN3705, CN3715 and CN3755 from ARKEMA.

Suitable amine synergists are commercially available as Omnipol^{™} ASA, Omnipol^{™} 894 and Esacure^{™} A198 from IGM Resins.

Preferred commercial acrylated amine synergists include Photomer^{™} 4068, 4250, 4771, 4775, 4780, 4967 and 5006 from IGM Resins.

### Other Photoinitiators

Other photoinitiators may be present in the UV curable inkjet ink, preferably a Norrish type I initiator or a Norrish type II initiator. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or a co-initiator.

Suitable other photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

### Norrish Type I Photoinitiators

In addition to the acylphosphine oxide photoinitiator as Norrish Type I photoinitiator, a second Norrish Type I photoinitiator is preferably selected from the group consisting of benzoinethers, benzil ketals, α-haloketones, α ,α-dialkoxyaceto phenones, α-hydroxyalkylphenones, α-halosulfones, α-aminoalkylphenones, acylphosphine sulphides and phenylglyoxalates.

In a preferred embodiment, the other photoinitiator is an α-hydroxy ketone photoinitiator.

Suitable examples of the α-hydroxy ketone photoinitiators include, but are not particularly limited to, 1-hydroxycyclohexyl phenyl ketone, 2-hydroxy-2-methyl-1-phenyl propane-1-one and 1-[4-(2-hydroxyethoxy)-phenyl]2-hydroxy-2-methyl-1-propane-1-on.

Examples of commercially α-hydroxy ketone photoinitiators include, but are not particularly limited to, Omnirad^{M} 1173, Omnirad^{™} 184 and Omnirad^{™} 127 and Omnirad^{™} 4817 from IGM RESINS.

The content of the α-hydroxy ketone is preferably 1 to 10 wt%, more preferably 2 to 8 wt%, and still more preferably 3 to 6 wt% based on the total weight of the UV curable inkjet ink.

Ina particularly preferred embodiment, the α-hydroxy ketone photoinitiator is a polymeric or a polymerizable photoinitiator.

An example of a suitable polymeric α-hydroxy ketone photoinitiator is available as Esacure^{™} KIP150 from IGM RESINS.

Suitable polymerizable α-hydroxy ketone photoinitiators are disclosed in US 4922004 (MERCK) , such as 4-(2-acryloyloxyethoxy)-phenyl 2-acryloyloxy-2-propyl ketone prepared in Example 3 in that patent. Norrish Type II Photoinitiators

The UV curable inkjet ink preferably contains a Norrish Type II photoinitiator including a photoinitiating moiety selected from the group consisting of a thioxanthone group, a carbazole group and a benzophenone group. A Norrish Type II photoinitiator containing a thioxanthone group or a carbazole group is particularly preferred as it is advantageous for UV LED curing, especially for UV LEDs having an emission wavelength of more than 360 nm or even more than 370 nm.

Suitable examples of Norrish Type II photoinitiators containing a thioxanthone group include, but are not particularly limited to, thioxanthone; diethylthioxanthone, such as 2,4-diethylthioxanthone; isopropylthioxanthone, such as 2-isopropylthioxanthone and 4-isopropylthioxanthone; and chlorothioxanthone, such as 2-chlorothioxanthone.

Specific examples of commercially available Norrish Type II photoinitiators containing a thioxanthone group are Speedcure^{™} DETX (2,4-diethylthioxanthone) and Speedcure^{™} ITX (2-isopropylthioxanthone) from LAMBSON and Kayacure^{™} DETX-S (2,4-diethylthioxanthone) from Nippon Kayaku Co..

Preferred carbazole photoinitiators are disclosed by EP 2509948 A (AGFA). These carbazole photoinitiators have the advantage over thioxanthone photoinitiators of exhibiting less photoyellowing.

Suitable examples of Norrish Type II photoinitiators containing a benzophenone group include, but are not particularly limited to, benzophenone; methylbenzophenone; methyl-2-benzoylbenzoate, phenylbenzophenone, such as 4-phenylbenzophenone; trimethylbenzophenone; bis(alkylamino)benzophenone; and 4-(dialkylamino)benzophenone.

Specific examples of commercially available Norrish Type II photoinitiators containing a benzophenone group are Omnirad^{™} 4MBZ and Omnirad^{™} BP from IGM RESINS, Speedcure^{™} PBZ and Speedcure^{™} 5040 from LAMBSON. The latter is a mixture of benzophenone and thioxanthone.

Preferred examples of polymerizable Norrish Type II photoinitiators including a photoinitiating moiety selected from the group consisting of a thioxanthone group or a benzophenone group are disclosed in EP 2161264 A (AGFA), EP 2199273 A (AGFA) and EP 2684876 A (AGFA).

Preferred examples of polymeric Norrish Type II photoinitiators including a photoinitiating moiety selected from the group consisting of a thioxanthone group or a benzophenone group are disclosed in EP 1616920 A (AGFA) and EP 1616899 A (AGFA).

Commercial examples of polymeric thioxanthones and benzophenones include Omnipol^{™} BP, Omnipol^{™} TX, and Omnipol^{™} 2702 from IGM RESINS.

The content of the Norrish Type II photoinitiator including a photoinitiating moiety selected from the group consisting of a thioxanthone group, a carbazole group and a benzophenone group is preferably 0.5 to 7.5 wt%, more preferably 1 to 5 wt% based on the total weight of the free radical curable inkjet ink. However, if the Norrish Type II photoinitiator is a polymerizable or a polymeric thioxanthone compound, the content may be higher, preferably up to 20 wt%, more preferably up to 15 wt% based on the total weight of the UV curable inkjet ink.

### Colour Pigments

The UV curable inkjet ink may contain a colour pigment, preferably an organic colour pigment. Organic colour pigments provide a much larger colour gamut than inorganic colour pigments, but are however more susceptible to light fading. The colour gamut represents the number of different colours that can be produced by an ink set.

The colour pigments may be black, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH , 2004. ISBN 3527305769.

A particularly preferred pigment for a cyan UV curable inkjet ink is C.I. Pigment Blue 60 or preferably a beta copper phthalocyanine pigment, more preferably C.I. Pigment Blue 15:3 or C.I. Pigment Blue 15:4.

A magenta or red UV curable inkjet ink preferably contains a quinacridone pigment, a diketopyrrolopyrrole pigment or mixed crystals thereof. In a preferred embodiment, the magenta or red UV curable inkjet ink preferably contains a pigment selected from the group consisting of C.I. Pigment Violet 19, C.I. Pigment Red 122, C.I. Pigment Red 144, C.I. Pigment Red 176, C.I. Pigment Red 188, C.I. Pigment Red 207, C.I. Pigment Red 242, C.I. Pigment Red 254, C.I. Pigment Red 272 and mixed crystals thereof.

A yellow UV curable inkjet ink preferably contains a yellow pigment selected from the group consisting of C.I. Pigment Yellow 83, C.I. Pigment Yellow 93, C.I. Pigment Yellow 97, C.I. Pigment Yellow 110, C.I. Pigment Yellow 120, C.I. Pigment Yellow 138,C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 185, C.I. Pigment Yellow 194, C.I. Pigment Yellow 213, C.I. Pigment Yellow 214 and mixed crystals thereof.

The above selected organic colour pigments for the cyan, magenta, red or yellow inkjet inks exhibit minimal light fading in the combination with a polymerizable composition as described above.

For a black UV curable ink, suitable pigment materials include carbon blacks such as Regal^{™} 400R, Mogul^{™} L, Elftex^{™} 320 from Cabot Co., or Carbon Black FW18, Special Black^{™} 250, Special Black^{™} 350, Special Black^{™} 550, Printex^{™} 25, Printex^{™} 35, Printex^{™} 55, Printex^{™} 90, Printex^{™} 150T from DEGUSSA Co., MA8 from MITSUBISHI CHEMICAL Co., and C.I. Pigment Black 7 and C.I. Pigment Black 11.

Also mixed crystals may be used. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia^{™} Magenta RT-355-D from Ciba Specialty Chemicals.

Also mixtures of pigments may be used. For example, a black UV curable inkjet ink may include a carbon black pigment and at least one pigment selected from the group consisting of a blue pigment, a cyan pigment, a magenta pigment and a red pigment. It was found that such a black inkjet ink allowed easier and better colour management by being a more neutral black inkjet ink.

The pigment particles in the pigmented inkjet ink should be sufficiently small to permit free flow of the ink through the inkjet printing device, especially at the ejecting nozzles. It is also desirable to use small particles for maximum colour strength and to slow down sedimentation.

The average particle size of the pigment in the pigmented inkjet ink should preferably be between 50 nm and 300 nm, more preferably between 80 and 200 nm, most preferably between 90 and 150 nm.

The pigment is used in the inkjet ink in an amount of 0.1 to 20 wt%, preferably 1 to 10 wt%, and most preferably 2 to 6 wt% based on the total weight of the UV curable inkjet ink. A pigment concentration of at least 2 wt% is preferred to reduce the amount of inkjet ink needed to produce a colour pattern, while a pigment concentration higher than 5 wt% reduces the colour gamut and increases the graininess for printing a colour pattern. The ink set may also contain a light density inkjet ink. In such a case the light density inkjet ink contains a pigment in an amount of preferably 0.1 to 1.0 wt%, more preferably 0.5 to 0.8 wt% based on the total weight of the UV curable inkjet ink.

The determination of the average particle diameter is best performed by photon correlation spectroscopy at a wavelength of 633 nm with a 4mW HeNe laser on a diluted sample of the pigmented inkjet ink. A suitable particle size analyzer used was a Malvern^{™} nano-S available from Goffin-Meyvis. A sample can, for example, be prepared by addition of one drop of ink to a cuvet containing 1.5 mL ethyl acetate and mixed until a homogenous sample was obtained. The measured particle size is the average value of 3 consecutive measurements consisting of 6 runs of 20 seconds.

However for a white UV curable inkjet ink, the numeric average particle diameter of the white pigment is preferably from 50 to 500 nm, more preferably from 200 to 400 nm, and most preferably from 250 to 350 nm. Sufficient hiding power cannot be obtained when the average diameter is less than 50 nm, and the storage ability and the jet-out suitability of the ink tend to be degraded when the average diameter exceeds 500 nm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern^{™} nano-S available from Goffin-Meyvis. A sample can, for example, be prepared by addition of one drop of ink to a cuvette containing 1.5 mL ethyl acetate and mixed until a homogenous sample was obtained. The measured particle size is the average value of 3 consecutive measurements consisting of 6 runs of 20 seconds.

Suitable white pigments are given by Table 2 in [0116] of WO 2008/074548 (AGFA GRAPHICS). The white pigment is preferably a pigment with a refractive index greater than 1.60. The white pigments may be employed singly or in combination. Preferably titanium dioxide is used as pigment with a refractive index greater than 1.60. Suitable titanium dioxide pigments are those disclosed in [0117] and in [0118] of WO 2008/074548 (AGFA GRAPHICS).

A white pigment is preferably present in an amount of 10% to 30% by weight of the UV curable inkjet ink, and more preferably 15% to 25%. An amount of less than 3% by weight cannot achieve sufficient covering power and usually exhibits very poor storage stability and ejection property.

### Polymeric Dispersants

A pigmented UV curable inkjet ink contains a dispersant to further improve pigment dispersion properties. For obtaining high printing reliability, the dispersant is preferably a polymeric dispersant. Such dispersant improves the reliability of the inkjet printing process due to a generally smaller sedimentation speed, especially when they contain secondary or tertiary amine groups.

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:
- DISPERBYK^{™} dispersants available from BYK CHEMIE GMBH;
- SOLSPERSE^{™} dispersants available from LUBRIZOL;
- TEGO^{™} DISPERS^{™} dispersants from EVONIK;
- EDAPLAN^{™} dispersants from MÜNZING CHEMIE;
- ETHACRYL^{™} dispersants from LYONDELL;
- GANEX^{™} dispersants from ISP;
- DISPEX^{™} and EFKA^{™} dispersants from BASF;
- DISPONER^{™} dispersants from DEUCHEM.

Particularly preferred polymeric dispersants include Solsperse^{™} dispersants from LUBRIZOL, Efka^{™} dispersants from BASF, Disperbyk^{™} dispersants from BYK CHEMIE GMBH, and Ajisper^{™} dispersants from AJINOMOTO FINE-TECHNO Co. Particularly preferred dispersants are Solsperse^{™} 32000, 35000 and 39000 dispersants from LUBRIZOL and Disperbyk^{™} 162 from BYK CHEMIE GMBH.

The dispersants may be used alone or in combination of two or more kinds thereof.

The polymeric dispersant is preferably used in an amount of 2 to 600 wt%, more preferably 5 to 200 wt%, most preferably 50 to 90 wt% based on the weight of the pigment.

### Dispersion synergists

The pigmented UV curable inkjet ink may include a dispersion synergist to further improve the dispersion stability by a polymeric dispersant and thus also the printing reliability as less pigment can sediment in the nozzle of a print head upon stand-by of an inkjet device.

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.

The dispersion synergist is preferably added in a smaller amount than the polymeric dispersant(s). The ratio of polymeric dispersant/dispersion synergist depends upon the pigment and should be determined experimentally. Typically, the ratio wt% polymeric dispersant/wt% dispersion synergist is selected between 2:1 to 100:1, preferably between 2:1 and 20:1.

Suitable dispersion synergists that are commercially available include Solsperse^{™} 5000 and Solsperse^{™} 22000 from LUBRIZOL.

Particular preferred pigments for the magenta ink used are a diketopyrrolopyrrole pigment or a quinacridone pigment. Suitable dispersion synergists include those disclosed in EP 1790698 A (AGFA GRAPHICS), EP 1790696 A (AGFA GRAPHICS) , WO 2007/060255 (AGFA GRAPHICS) and EP 1790695 A (AGFA GRAPHICS).

In dispersing C.I. Pigment Blue 15:3, the use of a sulfonated Cu-phthalocyanine dispersion synergist, e.g. Solsperse^{™} 5000 from LUBRIZOL is preferred. Suitable dispersion synergists for yellow inkjet inks include those disclosed in EP 1790697 A (AGFA GRAPHICS).

### Surfactants

The UV curable inkjet ink may contain a surfactant. The surfactant can be anionic, cationic, non-ionic, or zwitter-ionic. The surfactant is preferably present in an amount of 0.1 to 3 wt% based on the total weight of the UV curable inkjet ink. At higher concentrations than 3 wt%, the adhesion may deteriorate rapidly, while usually insufficient spreading of the ink is observed at concentration lower than 0.1 wt%.

The total quantity of surfactant is preferably less than 3 wt% based on the total weight of the ink and more preferably less than 1.5 wt% based on the total weight of the free radical curable inkjet ink to prevent foaming of the ink in its container. Such foaming has a negative impact on the printing reliability.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK^{™} 333, BYK^{™} UV3510 and BYK^{™} UV3511 from BYK Chemie and Tegoglide^{™} 410 from EVONIK.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl^{™} 350 , a silicone diacrylate from Cytec; the polyether modified acrylated polydimethylsiloxane BYK^{™} UV3500, BYK^{™} UV3510 and BYK^{™} UV3530, the polyester modified acrylated polydimethylsiloxane BYK^{™} UV3570, all manufactured by BYK Chemie; Tego^{™} Rad 2100, Tego^{™} Rad 2200N, Tego^{™} Rad 2250N, Tego^{™} Rad 2300, Tego^{™} Rad 2500, Tego^{™} Rad 2550, Tego^{™} Rad 2600, Tego^{™} Rad 2700, and Tego^{™} RC711 all manufactured by EVONIK. Another preferred silicone is Silwet^{™} L7500 from OSI SPECIALITIES BENELUX NV; Silaplane^{™} FM7711, Silaplane^{™} FM7721, Silaplane^{™} FM7731, Silaplane^{™} FM0711, Silaplane^{™} FM0721, Silaplane^{™} FM0725, Silaplane^{™} TM0701, Silaplane^{™} TM0701T all manufactured by CHISSO Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by GELEST Inc..

Particularly preferred surfactants for the free radical inkjet ink are Silmer^{®} surfactants from SILTECH CORPORATION, such as Silmer^{®} ACR Di-1508.

### Polymerization Inhibitors

The UV curable inkjet ink may also contain a polymerization inhibitor. Due to the fact that an ink contains the polymerization inhibitor, a polymerization reaction before curing, e.g. during storage or transport, can be prevented. It also improves the printing reliability, since the UV curable inkjet ink in a print head of an inkjet device is kept at a higher temperature such as 45 to 55°C.

Suitable polymerization inhibitors include phenol type antioxidants, hindered amine light stabilizers, phosphor type antioxidants, benzoquinone, hydroquinone and derivatives, such as hydroquinone monomethyl ether commonly used in (meth)acrylate monomers.

Examples of the phenolic polymerization inhibitor include, but are not limited to the following substances, p-methoxy phenol, cresol, t-butyl catechol, di-t-butyl-p-cresol, hydroquinone monomethylether, α-naphthol, 3,5-di-t-butyl-4-hydroxytoluene, 2,6-di-t-butyl-4-methylphenol, 2,2'-methylene-bis(4-methyl-6-t-butylphenol), 2,2'-methylene-bis(4-ethyl-6-butylphenol), and 4,4'-thio-bis(3-methyl-6-t-butylphenol) and pyrogallol.

Suitable commercial inhibitors are, for example, Sumilizer^{™} GA-80, Sumilizer^{™} GM and Sumilizer^{™} GS produced by Sumitomo Chemical Co. Ltd.; Genorad^{™} 16, Genorad^{™} 18 and Genorad^{™} 20 from Rahn AG; Irgastab^{™} UV10 and Irgastab^{™} UV22, Tinuvin^{™} 460 and CGS20 from Ciba Specialty Chemicals; Floorstab^{™} UV range (UV-1, UV-2, UV-5 and UV-8) from Kromachem Ltd, Additol^{™} S range (S100, S110, S120 and S130) from Cytec Surface Specialties.

A preferred polymerization inhibitor is Irgastab^{™} UV10 from BASF. Other examples of polymerization inhibitor include TEMPO, TEMPOL, and Al cupferron.

The polymerization inhibitors may be used alone or in combination of two or more kinds thereof.

In a preferred embodiment, the polymerization inhibitor is a mixture of different types of polymerization inhibitors. Preferred polymerization inhibitors are mixtures of an oxyl free radical-based polymerization inhibitor, a phenol-based polymerization inhibitor, and an amine-based polymerization inhibitor. Suitable examples are given in EP 2851402 A (FUJIFILM) .

The polymerization inhibitor is preferably present in an amount of 0.1 to 5 wt% based on the total weight of the UV curable inkjet ink. Below 0.1 wt%, the undesired polymerization is insufficiently inhibited and above 5 wt% the curing speed is heavily reduced.

### Other Ink Ingredients

Other components of types known in the art may be present in the ink to improve the properties or performance. These components may be, for example, defoamers, water, organic solvents, UV stabilizers, reodorants, flow or slip aids, passive resins, fillers like silica or alumina, biocides and identifying tracers. However, the UV curable inkjet ink of the present invention most preferably includes no organic solvent or water.

### Preparation of UV Curable Inkjet Inks

The preparation of UV curable inkjet inks is well-known to the skilled person. Preferred methods of preparation are disclosed in paragraphs [0076] to [0085] of WO 2011/069943 (AGFA) .

### Inkjet Printing Methods

An inkjet printing method in accordance with the invention includes the steps of: a) jetting a UV curable inkjet ink as described above on a substrate; and b) UV curing the jetted UV curable inkjet ink with UV LEDs having an emission wavelength larger than 360 nm.

In a preferred embodiment of the inkjet printing method, the substrate is a packaging material, particularly preferred is corrugated cardboard.

In a preferred embodiment of the inkjet printing method, a UV curable colourless inkjet ink is used as a varnish on a corrugated cardboard.

The UV curing is preferably performed by UV LEDs having an emission wavelength larger than 360 nm, preferably larger than 370 nm.

Any suitable inkjet device may be used for the inkjet printing method. An inkjet device preferably includes the above described UV curable inkjet ink (set) and UV LED sources having a spectral emission in the range of 360 to 420 nm.

The UV curable inkjet inks are jetted by print heads ejecting small droplets in a controlled manner through nozzles onto a substrate moving relative to the print head(s). A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink or liquid. When the voltage is again removed, the ceramic expands to its original shape, ejecting a drop of ink from the print head. Piezoelectric print heads have proven to be the most reliable print heads in industrial printing.

A preferred piezoelectric print head is a so called push mode type piezoelectric print head, which has a rather large piezo-element capable of ejecting also more viscous inkjet ink droplets. Such a print head is available from RICOH as the GEN5s print head.

Another preferred piezoelectric print head is a so-called through-flow piezoelectric drop-on-demand print head. Such a print head is available from TOSHIBA TEC as the CF1ou print head or from FUJIFILM as Samba^{™} G3L printhead. Through-flow print heads are preferred because they enhance the reliability of inkjet printing as the ink continuously flows through the print head.

In a multi pass inkjet printing process, an inkjet print head normally scans multiple times back and forth in a transversal direction across a stationary or moving ink-receiver surface. A multi-pass print mode of operation facilitates the hiding of individual nozzle failures. Sometimes the inkjet print head does not print on the way back, however bi-directional printing is preferred for obtaining a high areal throughput.

Another preferred inkjet device uses a "single pass printing process", which can be performed by using page wide inkjet print heads or multiple staggered inkjet print heads that cover the entire width of the substrate surface, wherein the image is printed in a single pass. In a single pass printing process, the inkjet print heads usually remain stationary and the substrate is transported under the inkjet print heads, thus allowing for increased productivity by having fast printing speeds.

An advantage for UV curing of using a multi-pass printing mode is that the UV curable inkjet inks are cured in consecutive passes, rather than in a single pass requiring a curing device with a high UV output. The print head lifetime is also larger for multi pass printing. While in single pass printing one side shooter is sufficient to replace the whole print head, in multi pass printing side shooters and even failings can be tolerated. The cost of a multi-pass printer is usually also much lower, especially for wide format substrates.

In a preferred embodiment, the number of passes used is to 2 to 6 passes, more preferably no more than 4 passes. The printing reliability for multi pass printing is higher than single pass inkjet printing.

For facilitating curing, the inkjet printer may include one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### Substrates

There is no limitation on the type of substrate for the UV curable ink of the invention. The substrates may be transparent, translucent or opaque. Preferred opaque substrates includes so-called synthetic paper, like the Synaps^{™} grades from Agfa-Gevaert which is an opaque polyethylene terephthalate sheet.

Suitable substrates include those having surfaces of metal, like aluminum; polyethylene; polypropylene; polystyrene; polycarbonate; polyvinyl chloride; polyesters like polyethylene terephthalate (PET), glycol-modified polyethylene terephthalate (PETG), polyethylene naphthalate (PEN) and polylactide (PLA); and polyimide.

However, in a preferred embodiment of the invention, the substrate is a packaging material, preferably folded carton or corrugated cardboard.

Corrugated cardboard is a packaging material formed by gluing one or more fluted sheets of paperboard (called corrugating medium) to one or more flat sheets of linerboard (called facings). It comes in four common types: (1) Single face: one fluted sheet glued to one facing (total two sheets); (2) Single wall: one fluted sheet sandwiched between two facings (total three sheets), also called double face or single ply; (3) Double wall: one single-face glued to one single wall so that two fluted sheets are alternatively sandwiched between three flat sheets (total five sheets), also called double cushion or double ply; and (4) Triple wall: two single-face glued to one single wall so that three fluted sheets are alternatively sandwiched between four flat sheets (total seven sheets), also called triple ply.

### Printed articles

In the present invention, a printed article includes a substrate, preferably corrugated cardboard, and a cured layer of a UV curable inkjet ink as described above.

There is no restriction on the shape of the substrate. It can be a flat substrate or it can be a three dimensional object like a bottle or furniture.

### EXAMPLES

### Materials

All materials used in the examples are readily available from standard sources such as Sigma-Aldrich Corporation and Thermo Scientific Chemicals (former Acros Organics) unless otherwise specified.

**15EO-TMPTA** is an ethoxylated (15) trimethylolpropane triacrylate containing fifteen ethoxy units having a molecular weight of 956 and available as Sartomer^{™} SR9035 from ARKEMA.

**Ethoxylated(5) HDDA** is available as Sartomer^{™} SR561 from ARKEMA.

**PEG400DA** is available as Sartomer^{™} SR344 from ARKEMA.

**Ethoxylated(3) HDDA-1** is available as Miramer^{™} M202 from Miwon Specialty Chemical.

**Ethoxylated(3) HDDA-2** is available as Photomer^{™} 4361 from IGM Resins.

**HDDA** is 1,6-hexanediol diacrylate available as Sartomer^{™} SR238 from ARKEMA.

**DPGDA** is available as Sartomer^{™} SR508 from ARKEMA.

**IDA** is available as Sartomer^{™} SR395 from ARKEMA.

**EOEOEA** is available as Sartomer^{™} SR256 from ARKEMA.

**Lauryl acrylate** is available as Sartomer^{™} SR335 from ARKEMA.

**IBOA** is isobornylacrylate available as Sartomer^{™} SR506D from ARKEMA.

**IBOMA** is isobornylmethacrylate available as Photomer^{™} 2012 from IGM Resins.

**TPO-L** is an acylphosphine oxide photoinitiator (MW=316) available as Omnirad^{®}TPO-L from IGM RESINS.

**CN3755** is a diacrylated amine synergist available as Sartomer^{™} CN3755 from ARKEMA.

**BYK UV 3511** is a silicone surfactant available as BYK^{™} UV 3511 from BYK CHEMIE GMBH.

**UV10** is 4-hydroxy-2,2,6,6-tetramethylpiperidinooxy sebacate available as from Shanghai FINC Chemical Technology Co., Ltd..

**MD5** is a polyvinylchloride substrate available as Metamark^{™} MD5-100 from METAMARK.

**MF** is a single wall corrugated board available from MOONFOX CK NV.

**MA-paper** is a MultiArt^{™} Digital Gloss 170 g/m² paper from PAPYRUS Belgium NV.

### Measurement methods

### 1. Viscosity

The viscosity of the UV curable compositions was measured at 45°C and at a shear rate of 1,000 s⁻¹ using a Rotovisco^{™} RV1 viscometer from HAAKE.

### 2. Surface Tension

The static surface tension of the UV curable inks was measured with a KRÜSS tensiometer K9 from KRÜSS GmbH, Germany at 25°C after 60 seconds.

### 3. Bending Test

Bending tests are performed on a MF corrugated board coated with an ink layer of a magenta ANUVIA^{™} inkjet ink of AGFA NV laid down by a 10 µm wired bar. The MF corrugated board coated with the ink layer was placed on a belt and cured in 6 passes at full power and at a linear belt speed of 20 m/min using a LED curing station equipped with 12W UV LEDs emitting at 395 nm from the company UVio. Then a 10 µm coating of an inkjet ink of Example 1 was applied and cured in the same way as the ink layer.

To test bending on these samples, a creasing must be applied to facilitate the folding process of the corrugated board. To make this creasing, the sample with the coated side facing down is placed on a cutting mat where a rod is pushed in parallel with the flutes of the corrugated board (flute direction 5 in Fig.1). On this created creasing the corrugated board is bend with an angle of 90°and 180°. The cardboard is opened again completely and then folded again with an angle of 90° and 180°. After each degree of bending, a score between 0 and 5 is noted down. Thus, for one sample there will be 4 scores given for bending in the flute direction 5 in Fig.1. The same creasing and bending process was then performed in the perpendicular direction 6 in Fig.1 (perpendicular on the flute direction 5). The same evaluation was performed, resulting in another 4 scores for a sample.

The 8 scores were added up to a total score of bending, which should be no more than 20 for a good result.

The criterion for awarding a score after a certain angle (90° or 180°) is given by Table 1.

**Table 1**

| **Score** | **Criterion** |
|---|---|
| 0 | No cracks visible |
| 1 | One crack visible over the whole sample |
| 2 | A few small cracks visible over the whole sample |
| 3 | Many thin and short cracks visible over the whole sample |
| 4 | A few deep or large cracks visible over the whole sample |
| 5 | Deep cracks visible over the whole sample |

### 4. Gliding Property

The gliding property of a UV curable inkjet ink was determined by a coating on MA-paper. The coating was made using a bar coater and a 10 µm wired bar. The samples were placed on a belt and cured at full power and at a linear belt speed of 20 m/min using a LED curing station equipped with 12W UV LEDs emitting at 395 nm from the company UVio. Six passes under the LED curing station were performed.

The samples were cut to a size of 350x35 mm to fit around an aluminium gliding block of a static friction tester. The aluminium gliding block and sample was placed with the smaller side (35 mm) facing downwards on an upper side of an inclined plane. This inclined plane is made by chipboard with a sliding mechanism underneath to control the angle that starts a 0° (horizontal). The angle is continuously increased by 1° and the angle at which the aluminium block starts gliding is noted. This procedure is done three times. The average angle is noted as the degree of gliding for that UV curable inkjet ink.

For good gliding, the value should not be more than 20 degrees.

### 5. Curability

The inkjet inks were coated on a white MD5 polyvinylchloride substrate using a bar coater and a 10 µm wired bar. The samples were placed on a belt and cured at full power and at a linear belt speed of 20 m/min using a LED curing station equipped with 12W UV LEDs emitting at 395 nm from the company UVio. The number of passes to get surface cure was taken as a measure for curing speed, with a maximum of 6 passes being acceptable. For excellent curability, preferably no more than 3 to 4 passes are required.

The surface cure was checked by wiping the surface of the cured samples five times with a Q-tip according to Table 2.

**Table 2**

| **Score Surface cure** | **Observation** |
|---|---|
| 0 | no visual damage |
| 1 | a change in surface gloss |
| 2 | clear surface damage |
| 3 | the coating is seriously damaged |
| 4 | almost full removal of the coating |
| 5 | coating was completely removed upon wiping |

### Example 1

This example illustrates how by controlling the ratios of certain components in the ink composition that good bending and gliding properties are obtained, while maintaining good UV curability.

### Preparation of UV Curable Inkjet Inks

The UV curable inkjet inks COMP-1 to COMP-14 and INV-1 to INV-30 were all prepared in the same manner by mixing the components according to Table 3 and Table 8. The weight percentage (wt%) of each component is based on the total weight of the UV curable inkjet ink. The viscosity and the static surface tension was measured for each UV curable inkjet ink and were all found to be between 7 and 10 mPa.s at 45°C, respectively 22 and 25 mN/m at 25°C

**Table 3**

| **wt% of component** | **COMP-1** | **COMP-2** | **COMP-3** | **COMP-4** | **COMP-5** | **COMP-6** | **COMP-7** |
|---|---|---|---|---|---|---|---|
| **Ethoxylated(5) HDDA** | 10.00 | 2000 | 2000 | 2000 | 2000 | 2500 | 2500 |
| **HDDA** | 47.40 | 43.40 | 49.40 | 30.40 | 30.40 | 28.40 | 28.40 |
| **IDA** | | | | 13.00 | 13.00 | | |
| **EOEOEA** | | | | | | 10.00 | |
| **Lauryl acrylate** | | | | | | | 10.00 |
| **IBOA** | | | | | | | |
| **IBOMA** | 17.75 | 17.75 | 11.75 | 17.75 | 17.75 | 17.75 | 17.75 |
| **TPO-L** | 12.00 | 12.00 | 12.00 | 12.00 | 12.00 | 12.00 | 12.00 |
| **CN3755** | 12.00 | 600 | 600 | 600 | 600 | 600 | 600 |
| **BYK UV 3511** | 0.35 | 0.35 | 0.35 | 0.35 | 0.35 | 0.35 | 0.35 |
| **UV10** | 0.50 | 0.50 | 0.50 | 0.50 | 0.50 | 0.50 | 0.50 |
| **TOTAL** | **100.00** | **100.00** | **100.00** | **100.00** | **100.00** | **100.00** | **100.00** |

**Table 4**

| **wt% of component** | **COMP-8** | **COMP-9** | **COMP-10** | **COMP-11** | **COMP-12** |
|---|---|---|---|---|---|
| **Ethoxylated(5) HDDA** | 2500 | 2500 | 2500 | 5000 | |
| **HDDA** | 31.40 | 36.40 | 28.40 | 0.40 | 50.40 |
| **EOEOEA** | | 500 | | | |
| **Lauryl acrylate** | 10.00 | | 10.00 | 11.00 | 11.00 |
| **IBOA** | | | | 600 | 600 |
| **IBOMA** | 17.75 | 17.75 | 17.75 | 9.75 | 9.75 |
| **TPO-L** | 12.00 | 12.00 | 12.00 | 16.00 | 16.00 |
| **CN3755** | 300 | 300 | 600 | 600 | 600 |
| **BYK UV 3511** | 0.35 | 0.35 | 0.35 | 0.35 | 0.35 |
| **UV10** | 0.50 | 0.50 | 0.50 | 0.50 | 0.50 |
| **TOTAL** | **100.00** | **100.00** | **100.00** | **100.00** | **100.00** |

**Table 5**

| **wt% of component** | **COMP-13** | **COMP-14** | **INV-1** | **INV-2** | **INV-3** | **INV-4** | **INV-5** | **INV-6** |
|---|---|---|---|---|---|---|---|---|
| **Ethoxylated(5) HDDA** | 2300 | | 25.00 | 2300 | 2500 | 2500 | 2300 | 2300 |
| **HDDA** | 7.40 | 27.40 | 28.40 | 27.40 | 27.40 | 28.40 | 27.40 | 27.40 |
| **DPGDA** | | 2300 | | | | | | |
| **Lauryl acrylate** | 11.00 | 11.00 | 10.00 | 11.00 | 11.00 | 10.00 | 11.00 | 11.00 |
| **IBOA** | 2600 | 6.00 | 2.00 | 2.00 | 8.00 | 600 | 600 | 10.75 |
| **IBOMA** | 9.75 | 9.75 | 13.75 | 13.75 | 9.75 | 9.75 | 9.75 | 500 |
| **TPO-L** | 16.00 | 16.00 | 14.00 | 16.00 | 12.00 | 14.00 | 16.00 | 16.00 |
| **CN3755** | 600 | 600 | 600 | 600 | 600 | 600 | 600 | 600 |
| **BYK UV 3511** | 0.35 | 0.35 | 0.35 | 0.35 | 0.35 | 0.35 | 0.35 | 0.35 |
| **UV10** | 0.50 | 0.50 | 0.50 | 0.50 | 0.50 | 0.50 | 0.50 | 0.50 |
| **TOTAL** | **100.00** | **100.00** | **100.00** | **100.00** | **100.00** | **100.00** | **100.00** | **100.00** |

**Table 6**

| **wt% of component** | **INV-7** | **INV-8** | **INV-9** | **INV-10** | **INV-11** | **INV-12** | **INV-13** | **INV-14** |
|---|---|---|---|---|---|---|---|---|
| **Ethoxylated(5) HDDA** | 2300 | 2300 | 2300 | 2300 | 3000 | 1500 | 10.00 | 500 |
| **HDDA** | 27.40 | 27.55 | 27.65 | 27.40 | 20.40 | 35.40 | 40.40 | 45.40 |
| **Lauryl acrylate** | 11.00 | 11.00 | 11.00 | 11.00 | 11.00 | 11.00 | 11.00 | 11.00 |
| **IBOA** | 15.75 | 6.00 | 600 | 600 | 600 | 600 | 600 | 600 |
| **IBOMA** | | 9.75 | 9.75 | 9.75 | 9.75 | 9.75 | 9.75 | 9.75 |
| **TPO-L** | 16.00 | 16.00 | 16.00 | 16.00 | 16.00 | 16.00 | 16.00 | 16.00 |
| **CN3755** | 600 | 600 | 600 | 600 | 600 | 600 | 600 | 600 |
| **BYK UV 3511** | 0.35 | 0.2 | 0.1 | 0.35 | 0.35 | 0.35 | 0.35 | 0.35 |
| **UV10** | 0.50 | 0.50 | 0.50 | 0.50 | 0.50 | 0.50 | 0.50 | 0.50 |
| **TOTAL** | **100.00** | **100.00** | **100.00** | **100.00** | **100.00** | **100.00** | **100.00** | **100.00** |

**Table 7**

| **wt% of component** | **INV-15** | **INV-16** | **INV-17** | **INV-18** | **INV-19** | **INV-20** | **INV-21** | **INV-22** |
|---|---|---|---|---|---|---|---|---|
| **15EO-TMPTA** | 2300 | | | | | | | |
| **Ethoxylated(5) HDDA** | | | | | 2300 | 2300 | 2300 | 2300 |
| **PEG400DA** | | 2300 | | | | | | |
| **Ethoxylated(3) HDDA-1** | | | | 2300 | | | | |
| **Ethoxylated(3) HDDA-2** | | | 2300 | | | | | |
| **HDDA** | 27.40 | 27.40 | 27.40 | 27.40 | 31.40 | 29.40 | 25.40 | 23.40 |
| **Lauryl acrylate** | 11.00 | 11.00 | 11.00 | 11.00 | 11.00 | 11.00 | 11.00 | 11.00 |
| **IBOA** | 6.00 | 600 | 600 | 600 | 600 | 600 | 600 | 600 |
| **IBOMA** | 9.75 | 9.75 | 9.75 | 9.75 | 9.75 | 9.75 | 9.75 | 9.75 |
| **TPO-L** | 16.00 | 16.00 | 16.00 | 16.00 | 12.00 | 14.00 | 18.00 | 2000 |
| **CN3755** | 600 | 600 | 600 | 600 | 600 | 600 | 600 | 600 |
| **BYK UV 3511** | 0.35 | 0.35 | 0.35 | 0.35 | 0.35 | 0.35 | 0.35 | 0.35 |
| **UV10** | 0.50 | 0.50 | 0.50 | 0.50 | 0.50 | 0.50 | 0.50 | 0.50 |
| **TOTAL** | **100.00** | **100.00** | **100.00** | **100.00** | **100.00** | **100.00** | **100.00** | **100.00** |

**Table 8**

| **wt% of component** | **INV-23** | **INV-24** | **INV-25** | **INV-26** | **INV-27** | **INV-28** | **INV-29** | **INV-30** |
|---|---|---|---|---|---|---|---|---|
| **Ethoxylated(5) HDDA** | 2300 | 2300 | 2300 | 2300 | 2300 | 2300 | 2300 | 2300 |
| **HDDA** | 29.40 | 27.40 | 25.40 | 23.40 | 17.40 | 27.40 | 27.40 | 27.40 |
| **Lauryl acrylate** | 11.00 | 11.00 | 11.00 | 11.00 | 11.00 | | 5.00 | 1500 |
| **IBOA** | 15.75 | 15.75 | 15.75 | 15.75 | 16.00 | 17.00 | 12.00 | 2.00 |
| **IBOMA** | | | | | 9.75 | 9.75 | 9.75 | 9.75 |
| **TPO-L** | 14.00 | 16.00 | 18.00 | 20.00 | 16.00 | 16.00 | 16.00 | 16.00 |
| **CN3755** | 600 | 600 | 600 | 600 | 600 | 600 | 600 | 600 |
| **BYK UV 3511** | 0.35 | 0.35 | 0.35 | 0.35 | 0.35 | 0.35 | 0.35 | 0.35 |
| **UV10** | 0.50 | 0.50 | 0.50 | 0.50 | 0.50 | 0.50 | 0.50 | 0.50 |
| **TOTAL** | **100.00** | **100.00** | **100.00** | **100.00** | **100.00** | **100.00** | **100.00** | **100.00** |

### Results and Evaluation

The UV curable inkjet inks COMP-1 to COMP-14 and INV-1 to INV-30 were evaluated for curability (#curing passes), gliding properties and bending and the results are respectively shown by Table 9 in the columns headed by "#curing passes", "Gliding test" and "Bending test". For ease of comparison, the columns are added with following headings:
Column headed by "wt% MMO" shows the wt% of monofunctional monomers and oligomers in the ink.
Column headed by "wt% MA" shows the wt% of monofunctional acrylates in the ink.
Column headed by "wt% MMA" shows the wt% of monofunctional methacrylates in the ink.
Column headed by "wt% EP" shows the wt% of ethoxylated polyfunctional acrylate monomers and oligomers in the ink.
Column headed by "wt% AP" shows the wt% of acylphosphine oxide photoinitiator in the ink.
All wt% are in these columns are based on the total weight of the UV curable inkjet ink.
The ratios R1 and R2 are as defined above.

**Table 9**

| **Sample** | **wt% MMO** | **wt% MA** | **wt% MMA** | **wt% EP** | **wt% AP** | **R1** | **R2** | **# curing passes** | **Gliding test** | **Bending test** |
|---|---|---|---|---|---|---|---|---|---|---|
| **COMP-1** | 17.75 | 0.00 | 17.75 | 10.00 | 12.00 | 0.2 | n.a. | >6 pass | 15 | 26 |
| **COMP-2** | 17.75 | 0.00 | 17.75 | 2000 | 12.00 | 0.5 | n.a. | >6 pass | 23 | 20 |
| **COMP-3** | 11.75 | 0.00 | 11.75 | 2000 | 12.00 | 0.4 | n.a. | >6 pass | 24 | 17 |
| **COMP-4** | 30.75 | 13.00 | 17.75 | 20.00 | 12.00 | 0.7 | 1.4 | >6 pass | 27 | 10 |
| **COMP-5** | 30.75 | 13.00 | 17.75 | 20.00 | 12.00 | 0.7 | 1.4 | >6 pass | 20 | 16 |
| **COMP-6** | 27.75 | 10.00 | 17.75 | 2500 | 12.00 | 0.9 | 1.8 | >6 pass | 16 | 17 |
| **COMP-7** | 27.75 | 10.00 | 17.75 | 2500 | 12.00 | 0.9 | 1.8 | >6 pass | 16 | 12 |
| **COMP-8** | 27.75 | 10.00 | 17.75 | 2500 | 12.00 | 0.8 | 1.8 | >6 pass | 17 | 16 |
| **COMP-9** | 22.75 | 5.00 | 17.75 | 2500 | 12.00 | 0.7 | 3.6 | >6 pass | 18 | 19 |
| **COMP-10** | 27.75 | 10.00 | 17.75 | 2500 | 12.00 | 0.9 | 1.8 | >6 pass | 24 | 14 |
| **COMP-11** | 26.75 | 17.00 | 9.75 | 5000 | 16.00 | 125.0 | 0.6 | 4 | 25 | 11 |
| **COMP-12** | 26.75 | 17.00 | 9.75 | 0.00 | 16.00 | 0.0 | 0.6 | 4 | 11 | 22 |
| **COMP-13** | 46.75 | 37.00 | 9.75 | 2300 | 16.00 | 3.1 | 0.3 | 6 | 25 | 13 |
| **COMP-14** | 26.75 | 17.00 | 9.75 | 0.00 | 16.00 | 0.0 | 0.6 | 4 | 11 | 23 |
| **INV-1** | 25.75 | 12.00 | 13.75 | 2500 | 14.00 | 0.9 | 1.1 | 6 | 18 | 11 |
| **INV-2** | 26.75 | 13.00 | 13.75 | 2300 | 16.00 | 0.8 | 1.1 | 5 | 18 | 7 |
| **INV-3** | 28.75 | 19.00 | 9.75 | 2500 | 12.00 | 0.9 | 0.5 | 5 | 16 | 8 |
| **INV-4** | 25.75 | 16.00 | 9.75 | 2500 | 14.00 | 0.9 | 0.6 | 3 | 16 | 9 |
| **INV-5** | 26.75 | 17.00 | 9.75 | 2300 | 16.00 | 0.8 | 0.6 | 3 | 16 | 9 |
| **INV-6** | 26.75 | 21.75 | 5.00 | 2300 | 16.00 | 0.8 | 0.2 | 3 | 12 | 20 |
| **INV-7** | 26.75 | 26.75 | 0.00 | 2300 | 16.00 | 0.8 | 0 | 3 | 13 | 16 |
| **INV-8** | 26.75 | 17.00 | 9.75 | 2300 | 16.00 | 0.8 | 0.6 | 3 | 18 | 17 |
| **INV-9** | 26.75 | 17.00 | 9.75 | 2300 | 16.00 | 0.8 | 0.6 | 4 | 18 | 20 |
| **INV-10** | 26.75 | 17.00 | 9.75 | 2300 | 16.00 | 0.8 | 0.6 | 3 | 16 | 13 |
| **INV-11** | 26.75 | 17.00 | 9.75 | 30.00 | 16.00 | 1.5 | 0.6 | 3 | 19 | 13 |
| **INV-12** | 26.75 | 17.00 | 9.75 | 1500 | 16.00 | 0.4 | 0.6 | 4 | 15 | 13 |
| **INV-13** | 26.75 | 17.00 | 9.75 | 10.00 | 16.00 | 0.2 | 0.6 | 4 | 11 | 13 |
| **INV-14** | 26.75 | 17.00 | 9.75 | 5.00 | 16.00 | 0.1 | 0.6 | 4 | 11 | 19 |
| **INV-15** | 26.75 | 17.00 | 9.75 | 2300 | 16.00 | 0.8 | 0.6 | 4 | 14 | 9 |
| **INV-16** | 26.75 | 17.00 | 9.75 | 2300 | 16.00 | 0.8 | 0.6 | 4 | 13 | 13 |
| **INV-17** | 26.75 | 17.00 | 9.75 | 2300 | 16.00 | 0.8 | 0.6 | 4 | 12 | 14 |
| **INV-18** | 26.75 | 17.00 | 9.75 | 2300 | 16.00 | 0.8 | 0.6 | 4 | 11 | 11 |
| **INV-19** | 26.75 | 17.00 | 9.75 | 2300 | 12.00 | 0.7 | 0.6 | 6 | 15 | 16 |
| **INV-20** | 26.75 | 17.00 | 9.75 | 2300 | 14.00 | 0.8 | 0.6 | 6 | 14 | 12 |
| **INV-21** | 26.75 | 17.00 | 9.75 | 2300 | 18.00 | 0.9 | 0.6 | 4 | 18 | 8 |
| **INV-22** | 26.75 | 17.00 | 9.75 | 2300 | 2000 | 1.0 | 0.6 | 3 | 16 | 10 |
| **INV-23** | 26.75 | 26.75 | 0.00 | 2300 | 14.00 | 0.8 | 0.0 | 5 | 13 | 13 |
| **INV-24** | 26.75 | 26.75 | 0.00 | 2300 | 16.00 | 0.8 | 0.0 | 4 | 13 | 13 |
| **INV-25** | 26.75 | 26.75 | 0.00 | 2300 | 18.00 | 0.9 | 0.0 | 4 | 13 | 10 |
| **INV-26** | 26.75 | 26.75 | 0.00 | 2300 | 2000 | 1.0 | 0.0 | 3 | 14 | 11 |
| **INV-27** | 36.75 | 27.00 | 9.75 | 2300 | 16.00 | 1.3 | 0.4 | 5 | 17 | 9 |
| **INV-28** | 26.75 | 17.00 | 9.75 | 2300 | 16.00 | 0.8 | 0.6 | 4 | 11 | 12 |
| **INV-29** | 26.75 | 17.00 | 9.75 | 2300 | 16.00 | 0.8 | 0.6 | 4 | 15 | 11 |
| **INV-30** | 26.75 | 17.00 | 9.75 | 2300 | 16.00 | 0.8 | 0.6 | 4 | 16 | 11 |

From the results in Table 9, it should be clear that only the UV curable inkjet inks INV-1 to INV-30 exhibit good bending and gliding properties, while maintaining good UV curability.

### Reference signs list

The reference signs used in the drawings are listed in Table 10.

**Table 10**

| | |
|---|---|
| 1 | Fluted paperboard |
| 2 | Paper linerboard |
| 3 | Paper linerboard |
| 4 | Glue |
| 5 | Flute direction |
| 6 | Perpendicular direction |

## Claims

1. A UV curable inkjet ink including:
a) 20 to 45 wt% of monofunctional monomers or oligomers including a monofunctional acrylate and 0 to 20 wt% of a monofunctional methacrylate;
b) 5 to 55 wt% of an ethoxylated polyfunctional acrylate monomer or oligomer;
c) 12.0 wt% or more of an acylphosphine oxide photoinitiator and optionally an amine synergist;
wherein the ratio R1 of the wt% of ethoxylated polyfunctional acrylate monomer or oligomer over the wt% of non-ethoxylated polyfunctional acrylate monomer or oligomer is between 0.1 and 4.0;
wherein the ratio R2 of the wt% of monofunctional methacrylate over the wt% of monofunctional acrylate is no more than 1.2; and
wherein all wt% are based on the total weight of the UV curable inkjet ink

2. The UV curable inkjet ink according to claim 1, wherein the UV curable inkjet ink is a UV curable colourless inkjet ink.

3. The UV curable inkjet ink according to claim 1 or 2, wherein the ethoxylated polyfunctional acrylate monomer or oligomer is present in an amount of 5 to 35 wt%.

4. The UV curable inkjet ink according to any of claims 1 to 3, wherein the ratio R1 is between 0.2 and 2.

5. The UV curable inkjet ink according to any of claims 1 to 4, wherein the UV curable inkjet ink including a polymerizable amine synergist.

6. The UV curable inkjet ink according to any of claims 1 to 5, wherein the acylphosphine oxide photoinitiator includes ethyl phenyl (2.4.6-trimethylbenzoyl) phosphinate.

7. The UV curable inkjet ink according to any of claims 1 to 6, wherein the acylphosphine oxide photoinitiator is present in an amount of 15 wt% or more.

8. The UV curable inkjet ink according to any of claims 1 to 7, wherein the ethoxylated polyfunctional acrylate monomer or oligomer includes two or three acrylate groups.

9. The UV curable inkjet ink according to any of claims 1 to 8. wherein the ethoxylated polyfunctional acrylate monomer or oligomer includes a compound selected from the group consisting of polyethylene glycol diacrylate, ethoxylated hexanediol diacrylate, ethoxylated trimethylolpropane triacrylate.

10. The UV curable inkjet ink according to any of claims 1 to 9, wherein the ethoxylated polyfunctional acrylate monomer or oligomer includes 3 or more ethoxy groups.

11. A UV curable inkjet ink set including a UV curable inkjet ink according to any of claims 1 to 10.

12. A corrugated cardboard including a UV cured layer of a UV curable inkjet ink according to any of claims 1 to 10.

13. An inkjet printing method including the steps of:
a) jetting a UV curable inkjet ink according to any of claims 1 to 10 on a substrate; and
b) UV curing the jetted UV curable inkjet ink with UV LEDs having an emission wavelength larger than 360 nm.

14. The inkjet printing method according to claim 11, wherein the substrate is a corrugated cardboard.

15. Use of a UV curable colourless inkjet ink according to any of claims 2 to 10 as a varnish on a corrugated cardboard.
